(19) Europäisches Patentamt
European Patent Office
Office européen des brevets

(11) Veröffentlichungsnummer : **0 043 456**
**B1**

(12) # EUROPÄISCHE PATENTSCHRIFT

(45) Veröffentlichungstag der Patentschrift : **02.05.84**

(51) Int. Cl.³ : **F 16 K 3/08**, C 04 B 35/48, F 16 J 15/34

(21) Anmeldenummer : **81104408.0**

(22) Anmeldetag : **09.06.81**

(54) **Maschinenbauteil aus oxidkeramischen Werkstoffkomponenten.**

(30) Priorität : **05.07.80 DE 3025596**

(43) Veröffentlichungstag der Anmeldung : **13.01.82 Patentblatt 82/02**

(45) Bekanntmachung des Hinweises auf die Patenterteilung : **02.05.84 Patentblatt 84/18**

(84) Benannte Vertragsstaaten : **DE FR GB IT**

(56) Entgegenhaltungen :
**EP-A- 0 019 335**
**DE-A- 2 744 700**
**DE-B- 1 282 377**
**DE-B- 1 291 957**
**FR-A- 1 454 755**
**FR-A- 2 445 305**
**DIN 4762**

(73) Patentinhaber : **Feldmühle Aktiengesellschaft**
**Fritz-Vomfelde-Platz 4**
**D-4000 Düsseldorf 11 (DE)**

(72) Erfinder : **Dworak, Ulf, Dr. Dipl.-Mineraloge**
**Pfarrstrasse 50**
**D-7066 Baltmannsweiler 2 (DE)**
Erfinder : **Jud, Hans**
**Hertfelder Strasse 78**
**D-7300 Esslingen (DE)**
Erfinder : **Olapinski, Hans, Dr. Dipl.-Chem.**
**Talstrasse 12**
**D-7307 Aichwald 1 (DE)**
Erfinder : **Fingerle, Dieter, Dr. Dipl.-Ing.**
**Kirchheimer Strasse 34**
**D-7311 Hochdorf (DE)**
Erfinder : **Krohn, Ulrich, Dr. Dipl.-Ing.**
**Friedrich-Haug-Strasse 5**
**D-7520 Leonberg (DE)**

(74) Vertreter : **Uhlmann, Hans, Dr. rer.nat., Dipl.-Chem.**
**Gladbacher Strasse 189**
**D-4060 Viersen 1 (DE)**

**EP 0 043 456 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Maschinenbauteil aus oxidkeramischen Werkstoffkomponenten

Die vorliegende Erfindung betrifft ein Maschinenbauteil aus oxidkeramischen Werkstoffkomponenten, das abdichtend wirkt und in reibendem Eingriff steht, wie z. B. Gleitring für axiale Gleitlagerdichtungen oder Ventilscheibe für Mischventile, insbesondere Ventilscheibe für sanitäre Mischbatterien.

Maschinenbauteile aus oxidkeramischen Werkstoffen wie z. B. Ventilscheiben, die in vorzugsweise aus zwei solcher Ventilscheiben bestehenden Steuerelementen verwendet werden, wie sie in Mischventilen, insbesondere aber in Mischbatterien des Sanitärbereiches zur Regulierung von Flüssigkeitsströmen eingebaut werden, sind bekannt. In der DE-B-12 82 377 ist z. B. ein keramischer Ventilsitz beschrieben, der aus 85-99 Gew.% Aluminiumoxid und 1-4 Gew.% Talk besteht. In bevorzugter Ausführung enthält ein solcher Ventilsitz 6 Gew.% Kaolin bei entsprechender Reduzierung des Aluminiumoxidanteils.

Aus der FR-A-14 54 755 ist die Herstellung solcher Ventilteile auch aus Mischungen bekannt, die neben 35 bis 70 Gew.% Zirkonoxid noch 7 bis 30 Gew.% Calzium- und Zirkonsilikat, 0 bis 30 Gew.% Magnesium- und Zirkonsilikat, 0 bis 25 Gew.% Töpferton und 0 bis 25 Gew.% Kaolin enthalten. Der Vorteil dieser bekannten keramischen Ventilscheiben liegt in der verbesserten Abriebbeständigkeit und der größeren Beständigkeit gegen Erosion und Korrosion gegenüber aus Hartmetallen hergestellten Ventilteilen. Ein weiterer Vorschlag, wie er in der DE-B-12 91 957 enthalten ist, geht dahin, die Abdichtwirkung von Ventilscheiben aus 95 bis 100 Gew.% Aluminiumoxid, 0 bis 3 Gew.% Talk und 0 bis 3 Gew.% Kaolin dadurch zu verbessern, daß die miteinander in Eingriff stehenden Seiten der Ventilscheiben so geläppt und poliert werden, daß sie eine Ebenheit von 3 Lichtbanden und eine Oberflächenbeschaffenheit mit einem quadratischen Mittelwert (geometrischer Mittenrauhwert) $< 10$ aufweisen.

Neben diesen, die Qualität eines keramischen Maschinenbauteils wie Ventildichtscheiben und Gleitringe kennzeichnenden Bezugsgrößen werden die bis jetzt bekannten Maschinenbauteile durch die Festlegung des Profiltraganteils beurteilt. Unter dem Profiltraganteil, der in weiten Bereichen der Technik, in denen die Beurteilung der Oberflächengüte eine wichtige Rolle spielt, seit langem bekannt ist, versteht man gemäß DIN 4762 das Verhältnis der tragenden Länge zur Bezugsstrecke. Bei der Herstellung von abdichtenden und in reibendem Eingriff stehenden Maschinenbauteilen war man bisher davon ausgegangen, daß die notwendige Dichtigkeit nur durch einen hohen Profiltraganteil erzielt werden kann. In der Tat weisen die bisher bekannten Ventilscheiben und Gleitringe Traganteile $> 70$ % auf. Mit der Höhe des Traganteiles nimmt jedoch auch die Kraft zu, die beispielsweise zur Gegeneinanderverschiebung zweier in Eingriff stehender Ventilscheiben erforderlich ist. Bei den bekannten Ventilscheiben ist infolge ihres hohen Profiltraganteils daher auch eine hohe Verschiebekraft notwendig. Um den Nachteil der hohen Verschiebekraft auszugleichen, behilft man sich nach wie vor damit, bei der Montage der Steuerelemente etwas Fett, zumeist auf Silikonbasis, zwischen die Ventilscheiben zu schmieren. Das eingebrachte Fett befindet sich dabei zunächst in sogenannten Schmiertaschen, das sind Vertiefungen auf der Oberfläche der Ventilscheiben. Durch den Einfluß des Wassers ist die Wirkung des Fettes jedoch nicht von Dauer und schließlich nicht mehr vorhanden. Von diesem Moment an muß eine höhere Verschiebekraft aufgewendet werden und es setzt ein erhöhter Verschleiß ein, da im Wasser befindliche Verunreinigungen, wie z. B. Sand, die glatten Oberflächen der flächig aufeinanderliegenden Ventilscheiben mehr und mehr beschädigen.

Der durch die aufzuwendende hohe Verschiebekraft entstehende Nachteil besteht für den Benutzer z. B. einer sanitären Mischarmatur, insbesondere bei älteren Armaturen darin, daß eine feine Regulierung und Mischung von Heiß- und Kaltwasserströmen nicht auf Anhieb möglich ist und die Einstellung deshalb unter Umständen mehrfach korrigiert werden muß.

Man hat auch bereits versucht, den Profiltraganteil der Ventilscheiben durch Schleifen mit gröberem Diamantkorn zu reduzieren. Auch diese Maßnahme brachte noch nicht den gewünschten Erfolg, weil bei einem auf diese Weise erzeugten geringeren Profiltraganteil von z. B. $< 40$ % die Dichtungswirkung der Steuerelemente nachläßt. Die Nachteile der bisher bekannten Gleitringe liegen darin, daß durch zu hohen Traganteil die Trockenreibung zunimmt und damit Trockenlauftemperature über 300 °C auftreten.

Die Aufgabe der vorliegenden Erfindung ist die Überwindung dieser bestehenden Nachteile. Insbesondere will die Erfindung Maschinenbauteile schaffen, die in reibendem Eingriff stehen und vollkommen abdichtend wirken, die aber trotzdem leicht gegenüber den Maschinenteilen, mit denen sie in Eingriff stehen, verschiebbar sind. Entsprechend der Erfindung hergestellte Ventilscheiben sollen infolge der leichten Verschiebbarkeit der Ventilscheiben eine bessere Dosiermöglichkeit aufweisen, wobei diese Einstellungsfähigkeit auch nach langer Betriebsdauer erhalten bleiben soll. Dafür dürfen andere Eigenschaften wie insbesondere eine gute Thermoschockfestigkeit keinesfalls nachteilig beeinflußt werden. Entsprechend der Erfindung hergestellte Gleitringe sollen eine bessere Notlaufeigenschaft bei gleichzeitig niedrigerer Trockenlauftemperatur besitzen.

Die Lösung der Aufgabe gelingt durch ein aus oxidkeramischen Werkstoffkomponenten hergestelltes Maschinenbauteil, das durch die folgenden Merkmale gekennzeichnet ist :

a) Das Maschinenbauteil enthält 3,0 bis 25 Gew.% Zirkonoxid und/oder Hafniumoxid, die in die übrigen Werkstoffkomponenten in homogener Verteilung eingelagert sind und im Inneren des Maschinenbauteils zu überwiegendem Teil bei Raumtemperatur in metastabiler, tetragonaler Modifikation, and der Oberfläche des Maschinenbauteils jedoch in monokliner Modifikation vorliegen,

b) einen durch Oberflächenbehandlung wie Schleifen und Läppen erhaltenen Profiltraganteil von 10 bis 40 %,

c) einen Mittenrauhwert $R_a$ des Maschinenbauteils kleiner als 0,3 µm.

Zur Vereinfachung wird nachfolgend die Erfindung am Beispiel des Zirkonoxids beschrieben, sie gilt sinngemäß aber auch für das Hafniumoxid, zumal die im Handel befindlichen Zirkonoxidsorten vielfach Spuren von Hafniumoxid enthalten.

Die vorliegende Erfindung beruht auf der Eigenschaft des Zirkon- und/oder Hafniumoxids, sich bei Temperaturen unterhalb ca 1 100 °C aus der metastabilen tetragonalen Modifikation umzuwandeln. In der DE-A-27 44 700 hat die Anmelderin erst kürzlich einen Sinterwerkstoff auf Basis von dichten, nichtmetallischen Hartstoffen, wie hochschmelzenden Metallcarbiden, Metallnitriden, Metallboriden und Metalloxiden in Vorschlag gebracht, bei dem, wenn auch mit gänzlich anderer Zielsetzung, die Eigenschaft der Phasenumwandlung des Zirkon- und/oder Hafniumoxids ausgenutzt wird. Es handelt sich dabei um die Verbesserung von Bruchzähigkeit und Biegefestigkeit von Sinterwerkstoffen der oben beschriebenen Art, in die feine Teilchen von Zirkon- und/oder Hafniumoxid eingelagert sind, die sich bei mechanischer Beanspruchung aus der metastabilen tetragonalen Modifikation in die monokline Form umwandeln und wobei durch diese Phasenumwandlung Spannungen abgebaut werden.

Die hervorragende Wirkung der vorliegenden Erfindung beruht darauf, daß an der Oberfläche des Maschinenbauteils das Zirkonoxid in monokliner Modifikation vorliegt. Unter der Oberfläche ist dabei die mit einem anderen Maschinenbauteil in Eingriff zu bringende Funktionsfläche zu verstehen. Bei einer Ventilscheibe ist dies z. B. die Oberfläche einer weiteren Ventilscheibe. Bei einem Gleitring ist es ein gegen die Stirnfläche des Gleitringes liegendes Maschinenbauteil, z. B. aus einem selbstschmierenden Gleitwerkstoff, wie z. B. Kohle oder Phenolharz oder auch ein Maschinenbauteil, das aus dem gleichen Werkstoff hergestellt ist wie der Gleitring.

Die Umwandlung aus der metastabilen tetragonalen Modifikation erfolgt durch die in üblicher Weise im Anschluß an das Sintern durchgeführte Oberflächenbearbeitung, wie z. B. durch Schleifen oder Läppen, bzw. durch die dabei auftretende mechanische Beanspruchung. Der entscheidene Vorteil gegenüber den bekannten Maschinenbauteilen, wie z. B. Ventilscheiben aus 99 Gew.% Aluminiumoxid mit geringen Zusätzen von Magnesiumoxid ist nicht in allen Einzelheiten geklärt, erklärt sich jedoch voraussichtlich wie folgt :

Im Fall der bekannten Maschinenbauteile ist die Realisierung geringer Traganteile an eine relativ grobe Bearbeitung (grobes Schleifkorn) gebunden, was zu hohen Mittenrauhwerten und letztlich zu Problemen bei der Dichtigkeit führt.

Bei den erfindungsgemäßen Maschinenbauteilen kann der gewünschte Traganteil bei einem geforderten Mittenrauhwert Ra von z. B. 0,1 µm durch die Werkstoffzusammensetzung eingestellt werden. Bei gegebener mechanischer Einwirkung kommt es infolge der spannungsinduzierten Phasenumwandlung der an bzw. Unmittelbar unter der Oberfläche liegenden eingelagerten Zirkonoxidteilchen zu Mikroausbrüchen. Die Kornausbruchsgröße ist dabei durch Gestalt und Anzahl von Korngröße, Kornverteilung und Menge des eingelagerten Zirkonoxidanteils kontrollierbar geworden und ermöglicht die bisher nicht herzustellende Erzielung einer gewünschten geringen Rauhigkeit in Verbindung mit einem gewünschten geringen Profiltraganteil.

Zwischen den Oberflächen der erfindungsgemäßen und denen der bekannten Maschinenbauteile besteht demnach ein fundamentaler Unterschied. Während die bekannten Maschinenbauteile « größere » ebene Flächen aufweisen, die nur gelegentlich von wenigen, allerdings « größeren » Einschnitten unerbrochen sind, kann die Mikrostruktur der erfindungsgemäßen Maschinenbauteile wie folgt beschrieben werden :

Eine Vielzahl von Höhen und Tiefen, deren Differenz zur Einschnittiefe der bekannten Maschinenbauteile außerordentlich klein ist.

Die Ebenheit der erfindungsgemäßen Maschinenbauteile ist durchaus mit derjenigen der bekannten Maschinenbauteile vergleichbar. Die Rauhigkeit, unter der der arithmetische Mittenrauhwert Ra gemäß DIN 4762 zu verstehen ist, ist dagegen erheblich geringer. Der wesentliche Unterschied zu den bisher bekannten Maschinenbauteilen besteht aber in einem bis zu etwa auf den 8.Teil reduzierten Profiltraganteil.

Gemäß DIN 4762 erfolgt die Bestimmung des Profiltraganteils tp durch die Auswertung von Profilschnitten. Bei Oberflächen mit extrem feinen Ausbrüchen bzw. Vertiefungen im Bereich $< 1$ µm ist die Anwendung dieses Verfahrens jedoch nicht mehr sinnvoll, da die zur Ermittlung des Profilschnittes verwendete Tastnadel mit einem Radius $r = 3$ µm diese Feinheiten nicht mehr aufzulösen vermag.

Da die erfindungsgemäßen Maschinenbauteile einen Mittenrauhwert $< 0{,}3$ µm aufweisen, erfolgt die Ermittlung des Profiltraganteils in Abweichung von der genannten DIN-Norm durch Auswertung photographischer Aufnahmen (Auflichtmikroskopie). Hierbei erscheinen alle Vertiefungen in der Oberfläche (alle nicht ebenen Bereiche) auf Grund der nicht gerichteten Licht-Rückstreuung als dunkle Zonen.

Bei den erfindungsgemäßen Maschinenbauteilen ist deshalb immer ein Profiltraganteil zu verstehen, der in Analogie zur DIN 4762 definiert ist als :

$$tp = 100x(ln/l)\ (\%)$$

In = tragende Länge = helle Länge,
l = Bezugsstrecke.

Zur Auswertung werden je 10 Bezugsstrecken von 0,5 mm Länge herangezogen.

Durch den geringen Traganteil ist die Reibung der mit einem weiteren Maschinenbauteil in Eingriff stehenden erfindungsgemäßen Maschinenbauteile erheblich geringer. Am Beispiel eines Steuerelementes, dessen Ventilscheiben aus erfindungsgemäßen Maschinenbauteilen bestehen, ergibt sich dabei überraschenderweise, daß die Dichtigkeit des Steuerelementes durchaus mit der Dichtigkeit eines Steuerelementes vergleichbar ist, das mit bisher bekannten Ventilscheiben ausgerüstet ist. Durch die vorliegende Erfindung ist damit erstmals die Überwindung des bestehenden Vorurteils gelungen, wonach eine hohe Dichtigkeit eines aus keramischen Ventilscheiben hergestellten Steuerelementes nur dann erzielbar war, wenn die Ventilscheiben eine geringe Rauhigkeit, verbunden mit einem hohen Traganteil aufwiesen.

Ein weiterer, in der neuartigen Mikrostruktur der Oberfläche liegender Vorteil der erfindungsgemäßen Maschinenbauteile besteht darin, daß diese ohne zusätzliches Schmierfett eingesetzt werden können, wobei ihre volle Funktionsfähigkeit auch nach längerer Zeitdauer noch erhalten bleibt.

In einer besonders bevorzugten Ausführungsform enthalten die erfindungsgemäßen Maschinenbauteile 7 bis 16 Gew.% Zirkonoxid.

Der Mittenrauhwert Ra liegt vorzugsweise zwischen 0,1 und 0,03 µm.

Die erfindungsgemäßen Maschinenbauteile können als weitere oxidkeramische Werkstoffe Aluminiumoxid, Titanoxid und Mullit enthalten, ganz besonders bevorzugt ist davon das Aluminiumoxid, das vorteilhaft zu mindestens 75 Gew.% enthalten ist.

Für das verwendete Aluminiumoxid hat sich eine Teilchengröße von < 5 µm und für das Zirkonoxid eine Teilchengröße von 0,2 bis 2 µm als optimal geeignet erwiesen, für die Erzielung der gewünschten Oberflächencharakteristik.

Zugesetzt werden können dem Aluminiumoxid noch geringe Mengen eines Kornwachstumshemmers und Sinterhilfsmittels, wobei besonders eine Zugabemenge von 0,05 bis 0,25 Gew.% Magnesiumoxid geeignet ist.

Rein äußerlich unterscheiden sich die erfindungsgemäßen Maschinenbauteile von den bisher bekannten dadurch, daß die Oberfläche nicht das hochglänzende Aussehen der bisher bekannten Maschinenbauteile aufweist, sondern ein mehr mattglänzendes Aussehen besitzt. Die äußerlich mit bloßem Auge bereits erkennbaren Unterschiede sind auf die unterschiedliche Mikrostruktur der Oberfläche zurückzuführen, wobei ein hoher Profiltraganteil eine hochglänzende Oberfläche ergibt, während ein geringer Traganteil mit einer Vielzahl von Einschnitten — von allerdings sehr geringer Tiefe — den erfindungsgemäßen Maschinenbauteilen ein mattglänzendes Aussehen der Oberfläche verleiht. Diese andersartige Struktur in der Oberfläche ist allerdings nur dann erreichbar, wenn die Oberfläche so bearbeitet wird, daß an der Oberfläche der erfindungsgemäßen Maschinenbauteile tatsächlich eine Umwandlung des eingelagerten Zirkonoxids in die monokline Form stattfindet. Diese Umwandlung der an der Oberfläche oder unmittelbar unterhalb der Oberfläche sich befindenden eingelagerten Zirkonoxidteilchen erfolgt auf Grund der spannungsinduzierten Phasenumwandlung infolge der in diesem Oberflächenbereich bei der Bearbeitung mit Diamantkorn (Schleifen und/oder Läppen) wirksam werdenden hohen mechanisch/thermischen Belastung auf die eingelagerten Zirkonoxidteilchen sowie deren unmittelbare Umgebung.

Im Gegensatz dazu verharren die tiefer im Inneren der Maschinenbauteile befindlichen eingelagerten Zirkonoxidteilchen in der metastabilen tetragonalen Modifikation, da einerseits die durch den Schleif- bzw. Läpp-Prozeß aufgebrachte mechanisch/thermische Belastung in größerer Tiefe stark abnimmt und andererseits das Umklappen dieser tetragonalen Zirkonoxidteilchen in die monokline Modifikation, die unter Volumenzunahme erfolgt, durch die starke allseitige Einbindung der Teilchen (Druckkräfte) in die übrigen Werkstoffkomponenten behindert wird.

Die Figur zeigt ein Maschinenbauteil in Form einer Ventilscheibe in der erfindungsgemäßen Zusammensetzung, ohne daß die Erfindung auf diese Ausführungsform beschränkt ist.

Mit 1 ist die Ventilscheibe bezeichnet. Am Rande weist die Ventilscheibe 1 Ausnehmungen 2 auf. Mit 3 bzw. 3' sind die Durchlaßöffnungen für die zu mischenden Flüssigkeitsströme und mit 4 der Auslauf des gemischten Flüssigkeitsstromes bezeichnet. Bei 5 ist in schematisierter Form das Innere der Ventilscheibe dargestellt, in dem bei Raumtemperatur das eingelagerte Zirkonoxid in metastabiler, tetragonaler Modifikation vorliegt.

Die nachfolgenden Beispiele verdeutlichen die Erfindung, ohne daß die Erfindung auf die Beispiele beschränkt ist.

## Beispiel 1

330 g Zirkonsilikatpulver ($ZrSiO_4$) mit einer mittleren Korngröße von < 5 µm und 700 g Aluminiumoxidpulver ($Al_2O_3$) mit einer mittleren Korngröße von < 3 µm werden in einem hochwirksamen Mahlaggregat unter Zusatz von Wasser gemischt und vermahlen, wobei sich eine spezifische Oberfläche der Pulvermischung von ca. 13 $m^2/g$ ergab. Unter Zusatz eines wasserlöslichen Bindemittels wird das

entstandene Granulat bei einem Preßdruck vom 1 000 kp/cm² zu Ventilscheiben geformt. Die Form der Ventilscheibe entspricht der in der Figur dargestellten.

Die Scheiben werden in einem gasbeheizten Ofen bei einer Temperatur von 1 550 °C und einer Haltezeit bei dieser Temperatur von 3 Stunden zu dichten Körpern gebrannt. Diese Körper besitzen infolge der Umsetzungsreaktion

$$2\ ZrSiO_4 + 3\ Al_2O_3 \rightarrow 2\ ZrO_2 + 3\ Al_2O_3 \times 2\ SiO_2$$

die Endzusammensetzung : Mullit + Zirkonoxid sowie überschüssiges Aluminiumoxid.

Nach dem Läppen mit Diamantkorn von 5 µm auf einer gerillten, ebenen Stahlscheibe besitzen die Ventilscheiben eine mattglänzende Oberfläche mit einem extrem niedrigen Profiltraganteil, der durch lichtoptische Auswertung mit 15 % ermittelt wurde. Die Mittenrauhigkeit Ra wurde mit 0,05 µm gemessen.

Beispiel 2

900 g eines für die Herstellung von gesinterter, hochdichter und feinkörniger $Al_2O_3$-Keramik geeigneten Aluminiumoxidpulvers mit einem Zusatz von 0,1 Gew.% Magnesiumoxid und einer mittleren Teilchengröße von < 5 µm werden mit 100 g monoklinem (unstabilisiertem) Zirkonoxidpulver mit einer mittleren Teilchengröße von < 1 µm unter Zusatz von Wasser gemahlen und vermischt.

Der gemahlene Schlicker wird unter Zusatz eines üblichen wasserlöslichen Bindemittels sprühgetrocknet. Das so erhaltene Granulat wird bei einem Preßdruck von ca. 1 500 kp/cm² in einer hydraulischen axialwirkenden Presse zu einer Ventilscheibe entsprechend der Figur verpreßt.

Diese Ventilscheibe wird in einem gasbeheizten Ofen bei einer Temperatur von 1 600 °C und einer Haltezeit bei dieser Temperatur von 5 Stunden dichtgesintert.

Nach dem wie in Beispiel 1 durchgeführten Läppverfahren zeigen die Ventilscheiben eine mattglänzende Oberfläche mit einem Profiltraganteil von 20 % und eine Mittenrauhigkeit Ra = 0,08 µm. Die Ebenheit der bearbeiteten Ventilscheiben ist < 2 Lichtbanden.

In einer geeigneten Prüfapparatur, bei der ein schlagartiger Austausch des Kalt- und Heißwasserstromes vorgenommen werden kann, und bei der die Verhältnisse einer sanitären Mischarmatur simuliert werden können, wurd eine gemäß Beispiel 2 hergestellte Ventilscheibe mit einer formgleichen Ventilscheibe aus reiner Aluminiumoxidkeramik auf ihr Thermoschockverhalten verglichen. Die gemessene Thermoschockbeständigkeit der reinen Aluminiumoxidkeramischeibe lag dabei bei ΔT 110 °C, während die Ventilscheibe gemäß Beispiel 2 eine Thermoschockbeständigkeit von ΔT 110 °C aufwies.

Eine Untersuchung der Verschiebekraft bzw. des Verschiebemoments ergab für gemäß Beispiel 2 und Fig. 1 hergestellte Ventilscheiben und solchen aus reiner Aluminiumoxidkeramik folgende Werte :

| | MV [kp · cm] | Fv [kp] | |
|---|---|---|---|
| Reine Aluminium- | 6,50 | 24,3 | Loslösewerte |
| oxidkeramik | 4,50 | 5,6 | Gleitwerte |
| Ventilscheibe | 2,00 | 8,5 | Loslösewerte |
| gemäß Beispiel 2 | 1,50 | 2,5 | Gleitwerte |

MV = Verschiebemoment kp cm [kp · cm]
Fv = Vertikalverschiebung [kp]

Die Prüfung der Verschiebekräfte erfolgte auf einer für diesen Zweck entwickelten Apparatur mit Wasser von 13,5 bzw. 60 °C, die ermittelten Werte beziehen sich auf die reine Reibpaarung, d. h. Reibverluste der Mechanik der Armatur wurden in Abzug gebracht. Die Scheiben wurden mit 30 kp gegeneinander gepreßt. Zur Messung wurden Scheiben verwendet, die vorher in 200 000 Zyklen, das entspricht einer Benutzungsdauer von ca. 10 Jahren, betätigt worden waren.

**Ansprüche**

1. Maschinenbauteil aus oxidkeramischen Werkstoffkomponenten das abdichtendend wirkt und in reibendem Eingriff steht, wie z. B. Gleitring für axiale Gleitlagerdichtung oder Ventilscheibe für Mischventile, insbesondere sanitäre Mischbatterien, gekennzeichnet durch die folgenden Merkmale :

a) das Maschinenbauteil enthält 3,0 bis 25 Gew.% Zirkonoxid und/oder Hafniumoxid, die in die übrigen Werkstoffkomponenten in homogener Verteilung eingelagert sind und im Inneren des Maschinenbauteils zu überwiegendem Teil bei Raumtemperatur in metastabiler tetragonaler Modifikation, an der Oberfläche des Maschinenbauteils jedoch in monokliner Modifikation vorliegen,

b) einen durch Oberflächenbehandlung wie Schleifen und Läppen erhaltenen Profiltraganteil von 10 bis 40 %,

c) einen Mittenrauhwert $R_a$ des Maschinenbauteils kleiner als 0,3 µm.

2. Maschinenbauteil nach Anspruch 1, dadurch gekennzeichnet, daß der Anteil an Zirkonoxid und/oder Hafniumoxid zwischen 7 und 16 Gew.% liegt.

3. Maschinenbauteil nach einem der Ansprüche 1 und 2, dadurch gekennzeichnet, daß das Maschinenbauteil einen Mittenrauhwert $R_a$ aufweist, der zwischen 0,1 und 0,03 µm liegt.

4. Maschinenbauteil nach einem der Ansprüche 1 bis 3, gekennzeichnet durch einen Aluminiumoxidgehalt von mindestens 75 Gew.%.

**Claims**

1. A mechanical component which comprises constituents of ceramic oxide material and which has a sealing action and is in frictional engagement, such as, for example, a slide ring for an axial sliding bearing seal or a valve disc for mixing valves, especially for sanitary mixing assemblies, characterised by the following features :

a) the mechanical component contains from 3.0 to 25 % by weight of zirconium oxide and/or hafnium oxide, which is incorporated in homogeneous distribution in the other material constituents and which is predominantly in metastable, tetragonal modification at room temperature within the mechanical component but is in monoclinic modification on the surface of the mechanical component,

b) a profile bearing ratio of from 10 to 40 % obtained by surface treatment, such as grinding and lapping,

c) a mean roughness value $R_a$ for the mechanical component of less than 0.3 µm.

2. A mechanical component according to claim 1, characterised in that the proportion of zirconium oxide and/or hafnium oxide is from 7 to 16 % by weight.

3. A mechanical component according to claim 1 or 2, characterised in that it has a mean roughness value $R_a$ of from 0.1 to 0.03 µm.

4. A mechanical component according to any one of claims 1 to 3, characterised in that it has an aluminium oxide content of at least 75 % by weight.

**Revendications**

1. Pièce mécanique en un constituant de matériau céramique oxydé, ayant un effet d'étanchéité et en prise par frottement, comme par exemple une bague de glissement pour une étanchéité axiale de palier lisse, ou un disque obturateur de robinet pour mitigeurs, en particulier des robinetteries mélangeuses sanitaires, caractérisée en ce qu'elle présente les points suivants :

a) la pièce mécanique contient 3,0 à 25 % en poids d'oxyde de zirconium et/ou d'oxyde de hafnium, qui sont intercalés entre les autres constituants du matériau, en une répartition uniforme, et qui, à l'intérieur de la pièce mécanique, se présentent pour leur plus grande part, à la température ambiante, sous leur forme métastable tétragonale, mais sous leur forme monoclinique sur la surface de la pièce mécanique,

b) une fraction portante de profil, obtenue par un traitement de surface du type rectification ou rodage à la poudre abrasive, de 10 à 40 %,

c) une rugosité moyenne $R_a$ de la pièce mécanique inférieure à 0,3 µm.

2. Pièce mécanique selon la revendication 1, caractérisée en ce que le pourcentage d'oxyde de zirconium et/ou d'oxyde de hafnium est compris entre 7 et 16 % en poids.

3. Pièce mécanique selon l'une quelconque des revendications 1 ou 2, caractérisée en ce que la pièce mécanique présente une rugosité moyenne $R_a$ comprise entre 0,1 et 0,03 µm.

4. Pièce mécanique selon l'une quelconque des revendications 1 à 3, caractérisée en ce qu'elle contient une teneur en oxygène d'au moins 75 % en poids.

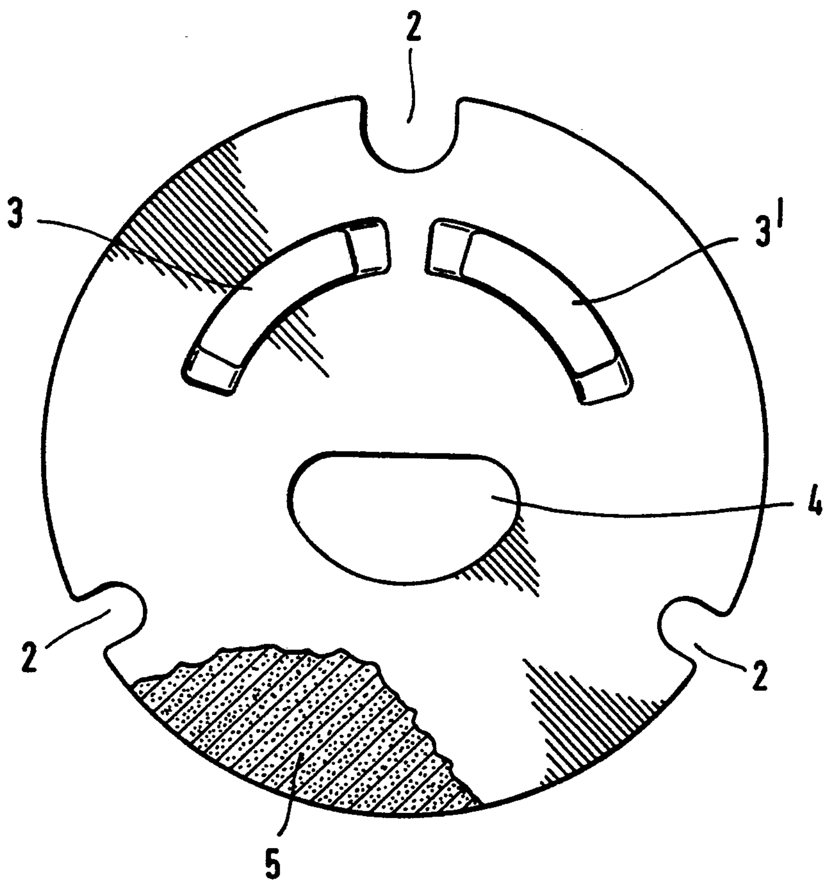
2
3
3'
4
2
2
5